(19) Europäisches Patentamt

European Patent Office

Office européen des brevets

(11) **EP 0 723 363 A2**

(12) **EUROPÄISCHE PATENTANMELDUNG**

(43) Veröffentlichungstag:
24.07.1996 Patentblatt 1996/30

(51) Int. Cl.⁶: **H04N 1/60**

(21) Anmeldenummer: 96100614.5

(22) Anmeldetag: 17.01.1996

(84) Benannte Vertragsstaaten:
AT BE CH DE DK ES FR GB GR IE IT LI LU NL PT SE

(30) Priorität: 18.01.1995 DE 19501358

(71) Anmelder: **MAZ Mikroelektronik Anwendungszentrum Hamburg GmbH**
D-21079 Hamburg (DE)

(72) Erfinder: **Pomierski, Torsten**
**10365 Berlin (DE)**

(74) Vertreter: **DIEHL GLAESER HILTL & PARTNER**
**Patentanwälte**
**Königstrasse 28**
**22767 Hamburg (DE)**

(54) **Verfahren zur Farbadaptation**

(57) Das auf der Grundlage neurophysiologischer Untersuchungen und Simulationen entwickelte Verfahren ermöglicht die technische Realisierung einer biologisch motivierten, empfindungsgemäßen Farbadaptation in einem physiologischen oder anderen Farbraum zur Erzielung eines mittleren Empfindungsniveaus und somit die optimale Aufbereitung einzelner Farbbilder oder ganzer Farbbildfolgen (Filme) für die visuelle Farbwahrnehmung des Menschen.

Die stattfindende Optimierung basiert auf der Analyse der Verteilung aller in den Farbraum transformierten RGB-Werte eines einzelnen Bildes oder einer ganzen Bildfolge und umfaßt alle Bildpixel. Es werden Lage-, Größen- und Formparameter der Punktwolke berechnet und mit Kenngrößen und -funktionen des Farbraumes in Übereinstimmung gebracht. Das Verfahren realisiert somit nach bildbezogener Rücktransformation stabile RGB-Farbwerte in Form eines auch vom visuellen System des Menschen angestrebten mittleren Empfindungsniveaus. Diese bedürfen bei ihrer Wahrnehmung keiner weiteren Farbadaptation des Betrachters und werden daher von diesem als gewohnte Farbempfindungen akzeptiert.

Somit ist das Verfahren vorrangig zur automatischen, referenzfreien Korrektur oder Nachbearbeitung von Filmen oder Einzelbildern geeignet, die

• mit ungenügendem Weißabgleich der Kamera aufgezeichnet wurden,
• unter wechselnden Beleuchtungsverhältnissen aufgenommen wurden,
• durch längere oder unsachgemäße Lagerung farbstichig geworden bzw. ausgeblichen sind oder

• einer Digitalisierung unterzogen und auf Compact Disc oder anderen Speichermedien abgelegt werden sollen.

Abb. 1b

# Beschreibung

Die Umwelt erscheint nur dann farbig, wenn sie in ausreichendem Maße beleuchtet wird. Das Tageslicht verändert sich aber in seiner Zusammensetzung ununterbrochen und das nicht nur im Verlauf eines Tages, sondern auch mit der Jahreszeit und dem Breitengrad. Dennoch sieht ein durchschnittlicher Beobachter die Farbe eines hölzernen Schreibtisches immer in annähernd gleicher, hellbrauner Farbe, egal, ob er ihn im Morgenlicht, im stark rötlichen Licht des späten Nachmittags oder im gelben Licht der elektrischen Glühlampe betrachtet. Tatsächlich reflektiert die Schreibtischplatte unter diesen Umständen jedesmal sehr verschiedene Wellenlängen. Auch wird die bezüglich eines Gegenstandes entstehende Farbempfindung nicht, wie man vermuten könnte, von dem durch dessen Oberfläche dominant reflektierten Licht bestimmter Wellenlänge festgelegt.

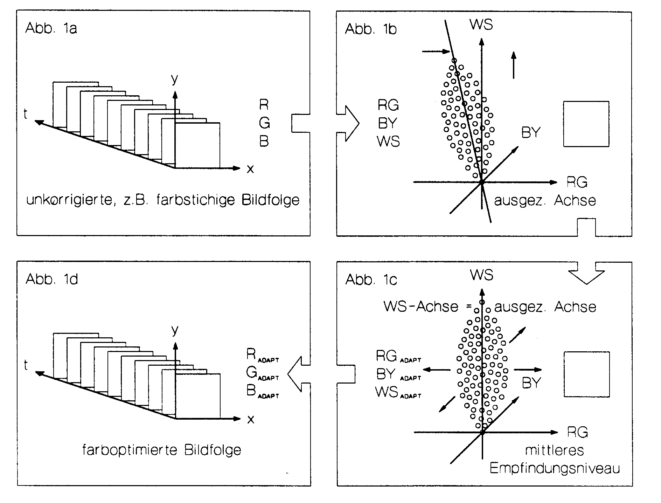

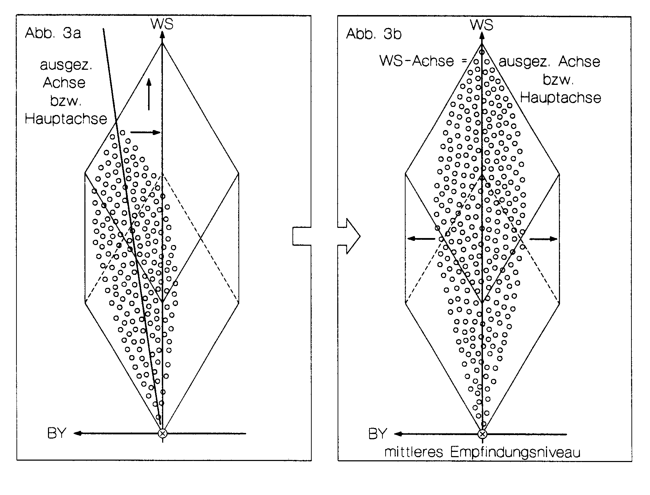

Die menschliche Farbwahrnehmung ermöglicht es, einen Gegenstand unabhängig vom eingestrahlten Wellenlängenspektrum im sichtbaren Bereich stets in gleicher Weise zu identifizieren. Das visuelle System ist bestrebt, sich durch Farbadaptation an die sich ändernde spektrale Zusammensetzung der Allgemeinbeleuchtung anzupassen, sich praktisch auf ein mittleres Empfindungsniveau einzustellen (Abb. 1c, 3d). Dies geschieht durch fortlaufende gleichberechtigte Analyse aller im Gesichtsfeld auftretenden Farbreize. Es besitzt somit die Fähigkeit, sich sowohl auf die jeweilige Allgemeinbeleuchtung als auch bei längerer ausschließlicher Betrachtung einer Einzelszene auf die Betrachtungsumstände (im Gesichtsfeld auftretende Umfeldfarben) einzustellen. Damit sind im allgemeinen die besten Voraussetzungen zur Realisierung stabiler Farbempfindungen aber auch zur optimalen Erkennung von Farbunterschieden durch optimale Ausnutzung des Simultankontrastes gegeben.

Kein derzeit bekanntes Verfahren analysiert die Gesamtheit aller in einen physiologischen oder anderen Farbraum transformierten Farbwerte einer Bildfolge oder einzelner Bilder, wie es das visuelle System des Menschen tut und wie es in dem der Erfindung zugrundeliegenden Verfahren vorgeschlagen wird. Nur die Analyse von Lage-, Größen- und Formparametern der gesamten Punktwolke (dreidimensionale Farbwertverteilung) erlaubt durch Herbeiführung einer Übereinstimmung mit Kenngrößen und -funktionen des physiologischen bder anderen Farbraumes die Überführung aller in ihr enthaltenen Farbwerte in ein mittleres Empfindungsniveau.

Es existieren eine Reihe von Verfahren, die versuchen, einzelne ausgewählte Farbwerte, Farbdifferenzsignale innerhalb bestimmter Sektoren der Chrominanzebene oder innerhalb bestimmter Bereiche eines Farbraumes allgemein zu modifizieren, um so gewohnte Farbempfindungen zu erzielen.

Beispielsweise wird im Verfahren EP 06 35 971 A2 zur verbesserten Farbkonvertierung eine Transformation von RGB-Werten in verschiedene mögliche Farbräume (HSI, L*a*b*) realisiert. In diesen wird eine Überführung beliebig wählbarer Qellfarbwerte definiert durch die Parameter hue, chroma und lightness in beliebig wählbare Zielfarbwerte ebenfalls definiert durch Parameter wie hue, chroma und lightness vorgeschlagen. Das Verfahren EP 06 01 241 A1 zur Farbtransformation realisiert eine Transformation einzelner, quantisierter Quellfarbwerte eines Quellfarbraumes in Zielfarbwerte eines Zielfarbraumes.

Das Verfahren WO 88 02 237 A1 zur Korrektur von Video-Farbsignalen ermöglicht eine Korrektur von RY- und BY-Farbdifferenzsignalen lediglich innerhalb eines definierten Hue-Sektors der Chrominanzebene eines Polarkoordinatensystems.

Das Verfahren DE 41 06 305/306 A1 zur Farbkorrektur eines Videosignals erlaubt die Vorgabe einzelner, wählbarer Farbwerte (hue, saturation, intensity) oder Farbwertbereiche innerhalb eines Farbraumes durch Auswahl mehrerer, diesen Bereich umgebender Farbwerte auf einem Monitor, die in wählbare Farbwerte (hue, saturation, intensity) oder Farbwertbereiche des Farbraumes überführt werden können.

Nachteilig bei diesen derzeit bekannten Verfahren ist, daß die Farbkorrektur ohne Berücksichtigung aller in einer Farbbildfolge oder in einem Einzelbild enthaltenen Farbwerte und ohne konkreten Bezug zu Kenngrößen und -funktionen des betreffenden Farbraumes erfolgt. Somit geht die Relation einzelner Farbwerte zur Gesamtheit der im Bild auftretenden Farbwerte verloren. Natürliche, gewohnte Farbempfimdungen bei Betrachtung eines so korrigierten Farbbildes sind praktisch ausgeschlossen.

Das Verfahren DE 43 10 727 A1 zur Analyse von Bildvorlagen realisiert eine Überführung von RGB-Werten in einen empfindungsgemäß gleichabständigen Referenzfarbraum (L*a*b*). Es erfolgt eine Analyse hinsichtlich Bildumfang, Bildgradation und Farbstich.

Zur Untersuchung des Bildumfanges erfolgt eine Histogrammbildung der L*-Komponente der L*a*b*-Werte eines Bildes. Diese Histogrammbildung bildet die Voraussetzung für die Bestimmung von Bildhell- und Bildtiefwert.

Zur Analyse der Bildgradation erfolgt eine Summenhistogrammbildung der Helligkeitskomponenten L* über sogenannten bildwichtigen Teilbildern. Aus diesem Summenhistogramm erfolgt die Berechnung einer Korrekturkurve zur Kontrastkorrektur.

Bei der Analyse des Farbstiches werden die Komponenten a* und b* der Farbwerte innerhalb bestimmter, durch die L*-Komponente definierter Helligkeitsbereiche der Vorlage analysiert.

Somit erfolgt hier eine farbraumbezogene Korrektur. Nachteilig bei diesem Verfahren ist jedoch, daß die Komponenten L*, a* und b* der einzelnen Farbwerte der Vorlage getrennt und teilweise nur für bestimmte bezüglich der Vorlage ortsabhängige Farbwerte L*a*b* analysiert werden.

Die Farbkorrektur erfolgt nicht durch Feststellung von Lage-, Größen- und Formparametern der durch alle Farbwerte im Farbraum gebildeten Punktwolke. Dies ist jedoch erforderlich, da letztlich alle ortsabhängigen Farbwerte, unabhängig von ihrer Lage innerhalb des Einzelbildes oder der Farbbildfolge, einen gleichberechtigten Beitrag zur Entstehung der Farbempfindung liefern.

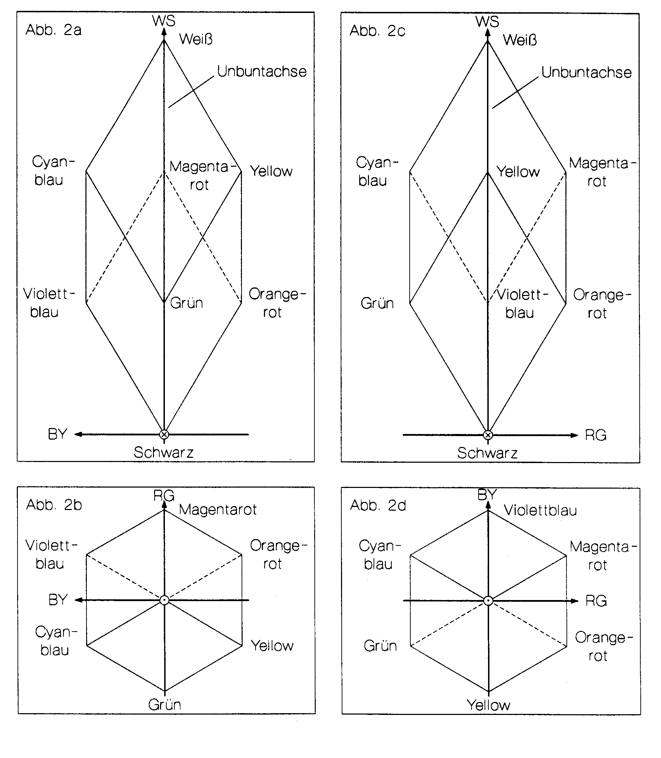

Das auf der Grundlage neurophysiologischer Untersuchungen und Simulationen entwickelte, der Erfindung entsprechende Verfahren ermöglicht die technische Realisierung einer biologisch motivierten, empfindungsgemäßen Farbadaptation aller auftretenden Farbwerte in einem physiologischen oder anderen Farbraum zur Erzielung des mittleren Empfindungsniveaus und somit die optimale Aufbereitung einzelner Farbbilder oder ganzer Farbbildfolgen (Filme) für die visuelle Farbwahrnehmung des Menschen. Die dem Erfindungsanspruch zugrundeliegende Transformation basiert auf Untersuchungen der Verschaltung von Zellen der Netzhaut (Zapfen, Horizontal-, Amakrin-, Bipolar- und Ganglienzellen) sowie des Corpus geniculatum laterale (seitlicher Kniehöcker) des Menschen. Die Verschaltung dieser Nervenzellen des visuellen Systems ermöglicht die Überführung der Zapfensignale in einen physiologischen Farbraum. Dieser wird durch die orthogonalen Aktivierungsachsen Rot/Grün (RG), Blau/Gelb (BY) sowie Weiß/Schwarz (WS) aufgespannt (Abb. 1, 2, 3) und umfaßt alle möglichen Farbempfindungen des Menschen.

Die Erfindung wird nachstehend an Hand der Zeichnungbeispielsweise erläutert.

Den Ausgangspunkt des Verfahrens bilden einzelne RGB-Bilder oder RGB-Bildfolgen (Abb. 1a) sowohl analoger als auch digitaler Signalquellen mit in konstantem Verhältnis gehaltener, übersteuerungsfreier Verstärkung für R-, G- und B-Signal (ohne notwendigerweise realisierten Weißabgleich). Jeder RGB-Pixel wird durch seinen R-, G- und B-Wert eindeutig beschrieben. Pro Bild oder Bildfolge werden alle ortsabhängigen RGB-Werte (Abb. 1a) entsprechend der erfindungsgemäßen Transformation in den physiologischen Farbraum transformiert und bilden dort eine Punktwolke (Abb. 1b, 3a). Die Position eines jeden Punktes der Wolke im physiologischen Farbraum ist durch seinen RG-, BY- und WS-Wert eindeutig beschrieben. Die für jedes RGB-Bild oder jede RGB-Bildfolge im physiologischen Farbraum entstehende Punktwolke ist entsprechend der bei der Bildaufnahme vorhandenen spektralen Zusammensetzung der Allgemeinbeleuchtung oder aufgrund eines bereits vorhandenen Farbstiches aus der WS-Achse (Unbuntachse) somit aus dem mittleren Empfindungsniveau ausgelenkt (Abb. 1b, 3a). Diese Auslenkung ist unabhängig vom Bildinhalt.

Für jede Punktwolke lassen sich charakteristische Merkmale (z.B. Lage, Form, Ausdehnung) bestimmen, die für die Wolke eines jeden Bildes mit vorzugebenden Kenngrößen oder -funktionen des physiologischen Farbraumes (z.B. Achsenlage, Farbraumgeometrie) in Übereinstimmung gebracht werden können und so die Rückführung der Punktwolke in das mittlere Empfindungsniveau ermöglichen.

Beispielsweise läßt sich für jede Punktwolke eine ausgezeichnete Achse (Abb. 1b, 3a) bestimmen, die für die Punktwolke eines jeden Einzelbildes oder eines jeden Bildes der Bildfolge in die WS- oder Unbuntachse überführt werden kann (Abb. 1c, 3b), was verbunden mit einer koordinatenabhängigen Reskalierung (Dynamikanpassung) entlang dieser Achse zu einer referenzfreien automatischen Farbadaptation des gesamten Bildes im physiologischen Farbraum, zu einer Kontrastverbesserung und letztlich zu einem Weißabgleich oder Unbuntabgleich führt, so daß sich nun die meisten Farbwerte auf oder in unmittelbarer Nähe der Unbuntachse befinden. Eine anschließende Dynamikanpassung entlang der bunten Achsen RG und BY führt zu einer optimalen Ausnutzung des durch die Farbraumgeometrie gegebenen möglichen Buntgades (saturation or chroma). In der so erzielten Lage der Punktwolke besteht das durch das intakte visuelle System eines normalsichtigen Beobachters bei Betrachtung einer einzelnen oder einer Folge von Farbszenen angestrebte mittlere Empfindungsniveau (Abb. 1c, 3b).

Die inverse Transformation ermöglicht die bildbezogene Rücktransformation der in ihrer Lage bezüglich der RG-, BY- und WS-Achse des physiologischen Farbraumes optimierten Punkte der Wolke in den RGB-Farbraum und somit die Erzeugung einzelner oder einer Folge hinsichtlich vorgegebener Zielparameter farbadaptierter RGB-Farbbilder (Abb. 1d).

Die stattfindende Optimierung basiert auf der Analyse der Verteilung aller in den Farbraum transformierten RGB-Werte eines einzelnen Bildes oder einer ganzen Bildfolge und umfaßt alle ortsabhängigen RGB-Werte. Die Relationen der einzelnen Farbwerte der Punktwolke eines Bildes zueinander bleiben erhalten. Das Verfahren gewährleistet somit nach bildbezogener Rücktransformation stabile RGB-Farbwerte in Form eines auch vom visuellen System des Menschen angestrebten mittleren Empfindungsniveaus. Diese bedürfen bei ihrer Wahrnehmung keiner weiteren Farbadaptation des Betrachters und werden daher von diesem als gewohnte Farbempfindungen akzeptiert.

Das Verfahren garantiert, daß die Farben immer in der Buntart (hue) wiedergegeben werden, die sie bei Beleuchtung mit der tageslichtähnlichen Normlichtart $D_{65}$ somit im Zustand des mittleren Empfindungsniveaus des Menschen, das keiner Farbadaptation bedarf, hervorrufen würden.

Somit ist das Verfahren vorrangig zur automatischen, referenzfreien Korrektur oder Nachbearbeitung von Filmen oder Einzelbildern geeignet, die

- mit ungenügendem Weißabgleich der Kamera aufgezeichnet wurden,
- unter wechselnden Beleuchtungsverhältnissen aufgenommen wurden,
- durch längere oder unsachgemäße Lagerung farbstichig geworden bzw. ausgeblichen sind oder

- einer Digitalisierung unterzogen und auf Compact Disc abgelegt werden sollen.

Gleichzeitig vermag es, bei geeigneter Wahl bestimmter Kenngrößen des Farbraumes, eine gezielte Verstimmung von Bildfolgen oder Einzelbildern z.B. eine Amerikanische Nacht oder einen freundlichen Warmton aller Farbwerte herbeizuführen.

**Patentansprüche**

1. Verfahren zur Realisierung einer Farbadaptation von RGB-Bildern beliebiger Signalquellen, dadurch gekennzeichnet, daß die RGB-Werte über eine Hintransformation in einem dreiachsigen Farbraum transformiert werden und eine Punktwolke mit charakteristischen Merkmalen gebildet wird; die Lage- und/oder Größen- und/oder Form- und/oder Dichteparameter der Punktwolke bildweise, teilbildweise, teilbildfolgeweise bzw. bildfolgenweise in freiwahlbaren Abständen berechnet werden; die Parameter der Punktwolke mit mindestens einer vorgegebenen Kenngröße und/oder-funktion des Farbraumes in Übereinstimmung gebracht werden; im Farbraum bei beliegigem Bildinhalt bezüglich des einzelnen Bildes eine referenzfreie automatische und bezüglich der Bildfolge darüber hinaus eine dynamische Farbadaptation hinsichtlich mindestens eines Zielparameters durchgeführt wird und daß eine bildbezogene zur Hintransformation inverse Rücktransformation der Punkte der Punktwolke zu farbadaptierten RGB-Bildern bzw. RGB-Teilbildern druchgeführt wird.

2. Verfahren zur Realisierung einer empfindungsgemäßen Farbadaptation eines einzelnen RGB-Bildes oder einer RGB-Bildfolge beliebiger Signalquellen mit in konstantem Verhältnis gehaltener, übersteuerungsfreier Verstärkung für R-, G- und B-Signal, ohne notwendigerweise realisierten Weißabgleich, **dadurch gekennzeichnet,** daß alle ortsabhängigen RGB-Werte eines einzelnen RGB-Bildes beliebiger Größe oder einer RGB-Bildfolge beliebiger Länge über eine Hintransformation in einen physiologischen oder anderen Farbraum transformiert werden, der durch drei orthogonale Achsen aufgespannt wird, im Ergebnis der Hintransformation im physiologischen oder anderen Farbraum eine mit charakteristischen Merkmalen behaftete Punktwolke (dreidimensionale Farbwertverteilung) entsteht, deren Lage- und/oder Größen- und/oder Form- und/oder Dichteparameter bildweise oder bildfolgenweise oder für Teile der Bildfolge und/oder in wählbaren Abständen berechnet und für die Punktwolke des einzelnen Bildes oder eines jeden Bildes der Bildfolge mit einer oder mehreren vorzugebenden Kenngrößen und/oder -funktionen des physiologischen oder anderen Farbraumes in Übereinstimmung gebracht werden, um so im physiologischen oder anderen Farbraum bei beliebigem Bildinhalt bezüglich des einzelnen Bildes eine referenzfreie automatische und bezüglich der Bildfolge darüber hinaus eine dynamische Farbadaptation hinsichtlich eines oder mehrerer vorzugebender Zielparameter zu realisieren, die nach einer bildbezogenen, bezüglich der Hintransformation inversen Rücktransformation aller Punkte der Wolke aus dem physiologischen oder anderen Farbraum zu einem einzelnen farbadaptierten RGB-Bild oder zu einer Folge farbadaptierter RGB-Bilder führt.

3. Verfahren nach Anspruch 2., dadurch gekennzeichnet, daß die drei orthogonalen Achsen des physiologischen Farbraumes die antagonistischen Farbaktivierungen spezieller Neuronen des Menschen Rot/Grün (RG), Blau/Gelb (BY) und Weiß/Schwarz (WS) darstellen und die Hintransformation der ortsabhängigen RGB-Werte über eine der folgenden, aus der Verschaltung der Zellen der Netzhaut sowie des Corpus geniculatum laterale des Menschen resultierenden Lineartransformationen erfolgt (Abb. 2a, b, c, d),

$$\begin{pmatrix} RG \\ BY \\ WS \end{pmatrix} = \begin{pmatrix} 0,500 & -1,0 & 0,500 \\ -0,875 & 0,0 & 0,875 \\ 1,500 & 1,5 & 1,500 \end{pmatrix} \begin{pmatrix} R \\ G \\ B \end{pmatrix}$$

oder

$$\begin{pmatrix} RG \\ BY \\ WS \end{pmatrix} = \begin{pmatrix} 0,875 & -0,875 & 0,0 \\ -0,500 & -0,500 & 1,0 \\ 1,500 & 1,500 & 1,5 \end{pmatrix} \begin{pmatrix} R \\ G \\ B \end{pmatrix}$$

wobei jede Zeile der Transformationsmatrizen mit einem beliebigen reellen Wert multipliziert bzw. durch einen beliebigen reellen Wert dividiert werden kann.

4. Verfahren nach Anspruch 2., dadurch gekennzeichnet, daß ein neuronales Netzwerk über Modifikation seiner synaptischen Wichtungen $\mathbf{w} = (w_{RG}, w_{BY}, w_{WS})^T$ (Lernprozesse) als Lageparameter der Punktwolke den eigenwertgrößten Eigenvektor $\mathbf{e}$ der Kovarianzmatrix $\mathbf{C}_{Kov}$ oder der Korrelationsmatrix $\mathbf{C}_{Korr}$ der Punkte $\mathbf{x} = (x_{RG}, x_{BY}, x_{WS})^T$ der Wolke, d.h. die Hauptachse (Hauptkomponente) der Punktwolke bestimmt.

5. Verfahren nach Anspruch 2 oder 3, dadurch gekennzeichnet, daß die WS- oder Unbuntachse oder das mittlere Empfindungsniveau eine vorzugebende Kenngröße des physiologischen Farbraumes bildet und ein vorzugebender Zielparameter einen Weißabgleich oder Unbuntabgleich darstellt.

Abb. 1a — unkorrigierte, z.B. farbstichige Bildfolge

Abb. 1b — ausgez. Achse

Abb. 1c — WS-Achse = ausgez. Achse; mittleres Empfindungsniveau

Abb. 1d — farboptimierte Bildfolge

Abb. 2a

Abb. 2c

Abb. 2b

Abb. 2d

Abb. 3a

ausgez.
Achse
bzw.
Hauptachse

WS

BY

Abb. 3b

WS

WS-Achse = ausgez. Achse
bzw.
Hauptachse

BY

mittleres Empfindungsniveau